# EUROPEAN PATENT APPLICATION

(11) **EP 3 879 092 A1**
(43) Date of publication of application: **15.09.2021**
(21) Application number: 20199453.0
(22) Date of filing: 30.09.2020
(51) Int. Cl.: F03D 1/06

(54) **HYBRID AIRFOIL**

(30) Priority: 11.03.2020 US 202016816204
(71) Applicant: 0832042 B.C. Ltd., Winfield, BC V4V 2N7 (CA)
(72) Inventor: HUNTER, Courtney Heath, Winfield, BC V4V 2N7 (CA)
(74) Representative: Patentanwälte und Rechtsanwalt Weiß, Arat & Partner mbB

(57) **Abstract**

The present invention relates to a modified airfoil, comprising: an original airfoil having an original leading edge profile with an original leading edge terminating at an x,y co-ordinate of 0,0 and a trailing edge terminating at an x,y co-ordinate of 1,0; and a shape modification element attached to the original airfoil such that a new leading edge of a new leading edge profile formed by the shape modification element terminates at a negative x co-ordinate relative to the original leading edge, wherein the new leading edge profile has a new leading edge profile shape with a NACA mean chord line between 0.3 and 0.7, a thickness between 12% and 17% of the chord line, with a maximum thickness located between 10% and 40% of the chord line, starting from the new leading edge of the new leading edge profile; and a leading edge radius between 1% and 6% of the chord line.

## Description

### FIELD OF THE INVENTION

The present specification relates generally to an airfoil, and more particularly to an airfoil that leads to improved power production at lower wind speeds.

### BACKGROUND OF THE INVENTION

The following includes information that may be useful in understanding the present disclosure. It is not an admission that any of the information provided herein is prior art nor material to the presently described or claimed inventions, nor that any publication or document that is specifically or implicitly referenced is prior art.

The use of wind turbines for power generation has increased rapidly along with the demand for clean, sustainable energy sources. In addition to other constraints, a key element of turbine design is the blade design. More particularly, the airfoil (cross-sectional shape) of the blade represents a determining factor in the blade's operating capabilities and efficiency.

Accordingly, much work has been conducted on airfoils to address operating parameters for wind turbines. The majority of current airfoils in use result in blades and turbines that require a certain level of input wind speed in order to operate efficiently for power conversion by the turbine. Thus, such turbines are limited in location and operating conditions by this requirement.

Therefore, it would be desirable to have an airfoil which results in a blade and turbine which is capable of operating at a desirable efficiency at a lower input wind speed.

Additionally, given the prevalence of existing blades using existing airfoils, it would also be desirable to provide a method of modifying an existing airfoil into a new shape which provides the capabilities discussed above.

Accordingly, there remains a need for improvements in the art.

### SUMMARY OF THE INVENTION

In accordance with an aspect of the invention, there is provided generally to an airfoil, and more particularly to an airfoil modified with a droop that leads to improved power production at lower wind speeds.

According to an embodiment of the invention, there is provided a modified airfoil, comprising: an original airfoil having an original leading edge profile with an original leading edge terminating at an x,y co-ordinate of 0,0 and a trailing edge terminating at an x,y co-ordinate of 1,0; and a shape modification element attached to the original airfoil such that a new leading edge of a new leading edge profile formed by the shape modification element terminates at a negative x co-ordinate relative to the original leading edge, wherein the new leading edge profile has a new leading edge profile shape with a NACA mean chord line between 0.3 and 0.7, a thickness between 12% and 17% of the chord line, with a maximum thickness located between 10% and 40% of the chord line, starting from the new leading edge of the new leading edge profile; and a leading edge radius between 1% and 6% of the chord line.

According to a further embodiment of the invention, there is provided a method for modifying an airfoil, comprising: defining the airfoil with a airfoil shape such that an original leading edge of an original leading edge profile is positioned at an 0,0 x,y co-ordinate and an original trailing edge is positioned at an 1,0 x,y co-ordinate; and modifying the original leading edge profile such that a new leading edge of a new leading edge profile is positioned at a negative x co-ordinate relative to the original leading edge, wherein the new leading edge profile has a new leading edge profile shape with a NACA mean chord line between 0.3 and 0.7, a thickness between 12% and 17% of the chord line, with a maximum thickness located between 10% and 40% of the chord line, starting from the new leading edge of the new leading edge profile; and a leading edge radius between 1% and 6% of the chord line.

For purposes of summarizing the invention, certain aspects, advantages, and novel features of the invention have been described herein. It is to be understood that not necessarily all such advantages may be achieved in accordance with any one particular embodiment of the invention. Thus, the invention may be embodied or carried out in a manner that achieves or optimizes one advantage or group of advantages as taught herein without necessarily achieving other advantages as may be taught or suggested herein. The features of the invention which are believed to be novel are particularly pointed out and distinctly claimed in the concluding portion of the specification. These and other features, aspects, and advantages of the present invention will become better understood with reference to the following drawings and detailed description.

Other aspects and features according to the present application will become apparent to those ordinarily skilled in the art upon review of the following description of embodiments of the invention in conjunction with the accompanying figures.

### BRIEF DESCRIPTION OF THE DRAWINGS

Reference will now be made to the accompanying drawings which show, by way of example only, embodiments of the invention, and how they may be carried into effect, and in which:
Figure 1 is a reference view for an airfoil;
Figure 2A is a side overlay graph of an original S822 airfoil profile and two modified S822 airfoil profiles according to an embodiment;
Figure 2B is performance coefficient graphs for the airfoils of Figure 2A;
Figure 3A is a side overlay graph of an original S823 airfoil profile and a modified S822 airfoil profile according to an embodiment;
Figure 3B is performance coefficient graphs for the airfoils of Figure 3A;
Figures 4A and 4B are side overlay graphs of original S80X airfoil profiles and modified S80X airfoil profiles according to an embodiment;
Figures 4C-4G are performance coefficient graphs for the airfoils of Figures 4A and 4B;
Figures 5A-5C are side overlay graphs of original S8XX airfoil profiles and modified S8XX airfoil profiles according to an embodiment;
Figures 5D-5F are performance coefficient graphs for the airfoils of Figures 5A-5C;
Figures 6A-6H are side overlay graphs of original NACA 64-6XX airfoil profiles and modified NACA 64-6XX airfoil profiles according to an embodiment with performance coefficient graphs for the airfoils;
Figures 7A-7C are side overlay graphs of original DU9X airfoil profiles and modified DU9X airfoil profiles according to an embodiment;
Figure 7D-7F are performance coefficient graphs for the airfoils of Figures 7A-7D;
Figures 8A-8B are side overlay graphs of original FFA-W3-XXX airfoil profiles and modified FFA-W3-XXX airfoil profiles according to an embodiment; and
Figures 8C-8F are performance coefficient graphs for the airfoils of Figures 8A-8B.

Like reference numerals indicated like or corresponding elements in the drawings.

### DETAILED DESCRIPTION OF THE EMBODIMENTS

The present invention relates to an airfoil and, in particular, a modified airfoil incorporating a droop to improve performance at lower wind speed.

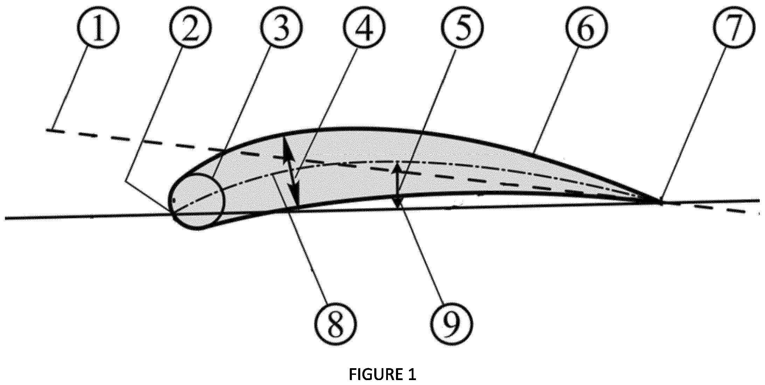

A reference airfoil profile geometry is shown in Figure 1. As shown, dashed line 1 represents the zero lift line. The leading edge 2 is shown terminating at a zero point (0,0) on the x,y coordinate reference plane for the geometry. The nose circle is shown in solid lines 3. The maximum thickness of the airfoil is shown as arrowed line 4. The upper surface 6 and lower surface 9 define the camber mean line 8, and the camber 5. Finally the trailing edge 7 is shown in the same x-coordinate plane as the leading edge, and is similarly situated at the zero point of the y-coordinate plane.

Considering the airfoil as used in a blade, an original blade is designed to operate at a specific tip speed ratio. If the blade is to be modified, the profile needs to be able to develop an increase in Lift to Drag ratio across the entire blade platform from root to tip. Through modification of the profile (airfoil), a new hybrid profile may be developed as a blend between two non-related profiles to improve performance.

According to an embodiment of the present invention, this hybrid profile may be created from an existing designed airfoil profiles (i.e. NACA profiles or the like) for a new leading edge redesign. The redesign may be developed over a grid platform to constrain the geometry of the original airfoil. The original profile is laid out on a grid with the chord line connecting the leading edge and the trailing running on top of one of the horizontal grid lines, similarly to as shown in Figure 1. This grid line is the x plane line and the leading edge of the original profile is located at the 0,0 x,y coordinate location and the trailing edge is located at the 1,0 x,y coordinate location. The selection of 1,0 for the trailing edge normalizes the profile to 100%.

The new leading edge profile is then located forward of the 0,0 coordinate such that the new leading edge is at a negative x-location in relation to the original leading edge location i.e. a droop. The leading edge may further be located, in some designs, at a negative y-location (i.e. below the x plane) as well. The new leading edge profile may also be rotated about this new location at a - or + angle to allow the new profile to blend into the upper surface of the original profile surfaces. Lastly, the new leading edge profile may be scaled compared to the normalized original profile so there can be a ratio developed between the original to new leading edge profile, for example, the ratio may be 0.8:1.0 or 80% of the original profile chord length (treated as 100%).

The scaling ratio required is related to the thickness of the original profile as well as the change in thickness from the root to the tip of the blade. Therefore in order to match to the upper surface contour of the original profile, the new leading edge profile results in a chord length that may range from 50% of the original profile chord length to as much as 250% of the original chord length.

When the process is completed, the new leading edge profile shape should have a NACA Mean chord line between 0.3 to 0.7. The new leading edge profile shape should also have a thickness of 12% to 17% of the new leading edge profile chord line (10% to 48% for larger rotors). The new leading edge profile shape should have a maximum thickness that is located between 10% and 40% of the chord line as located from the leading edge of the new leading edge profile. The new leading edge profile shape should have a leading edge radius between 1% to 6% of the new leading edge profile normalized chord line.

Creation of the new airfoil profile may be performed by the addition of a shape modification element to an existing blade (the original airfoil) to create the new profile shape with the new leading edge. The shape modification element may be permanently secured to the blade or may be detachable to permit for repair and replacement if needed, without requiring replacement of the entire blade. Accordingly, the shape modification element may be made of the same material as the existing blade, or a different material, depending on the materials used and the effect on performance parameters.

Alternatively, the new airfoil profile may be applied to a completely new blade built to the new profile specification. In this case, the new airfoil profile may still be based on a modification of an existing (original) airfoil profile, but rather than modifying an existing blade, a new blade is built to the new airfoil profile according to known methods for the manufacture of blades.

When modifying an existing airfoil, the existing symmetry or asymmetry, as well as the degree (positive or negative) and nature (reflexed or non-reflexed) of the camber, may be preserved, although the absolute values may change. In particular, the camber line is generally expected to move forward from the original, which may break symmetry, and the location of the maximum camber is expected to change with the modification to the new leading edge.

Accordingly, when creating a new blade, the airfoil may be symmetric or asymmetric, as desired, based on other operating parameters and requirements. Similarly, the airfoil may be designed with either a positive or negative camber, considering the expected operating parameters and requirements. Finally, the camber may be reflexed or non-reflexed, again following the operating parameters and requirements.

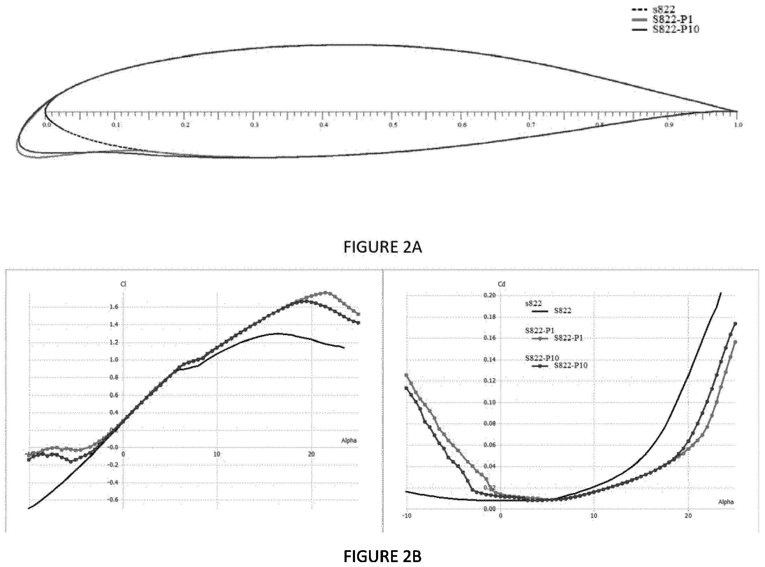

Modifications and supporting experimental data for the existing airfoils are shown in Figures 2A-8F. Airfoils modified and tested included NREL S8XX series airfoils, NACA64-6XX series airfoils, DU9X series airfoils and FFA-W3-XXX series airfoils. Based on the results, it is expected that modification potential is not limited to these airfoils, but may be applied to other airfoil types and series as well.

Airfoil coefficients were modelled using one or both of XFOIL and CFD (computation fluid dynamics) software. Performance of the airfoil was then modelled using a BEM (Blade Element Momentum) model. As shown, the resulting calculated performance of the modified airfoil produces improved results for lift coefficient (CI), drag coefficient (Cd) and lift/drag coefficient (Cl/Cd) at higher angles of attack (Alpha or AOA). Such results are further found to be generally consistent across all modified airfoils of a given class.

Referring first to Figures 2A-5D the NREL S8XX series airfoils were modified from the original profiles as shown. The performance was modelled and the results detailed in the accompanying graph for each original and modified airfoil. Performance was consistent with improved performance parameters at higher angles of attack.

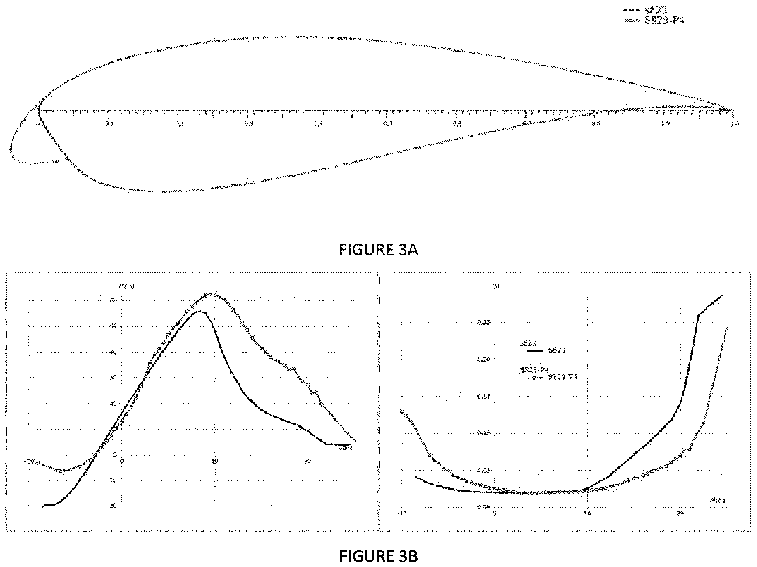

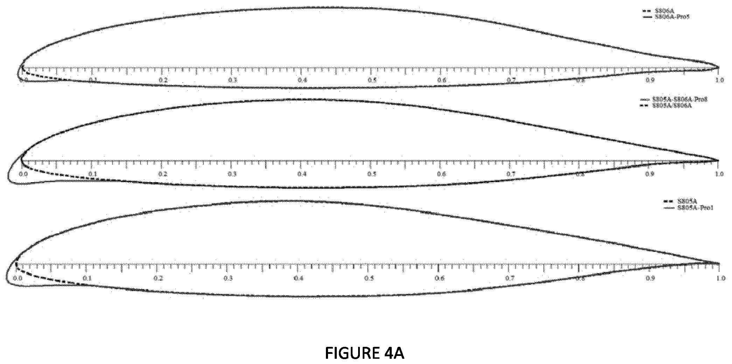

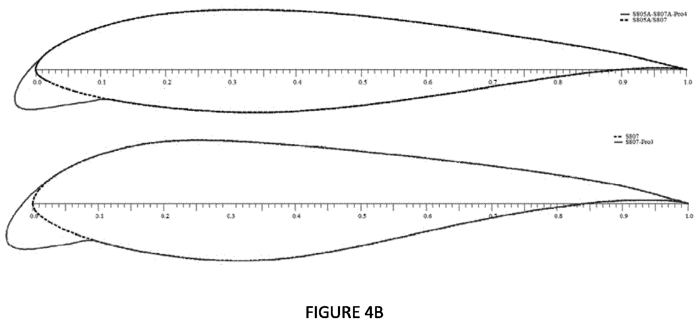

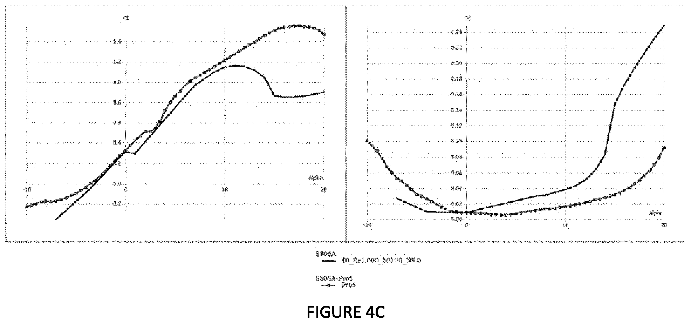

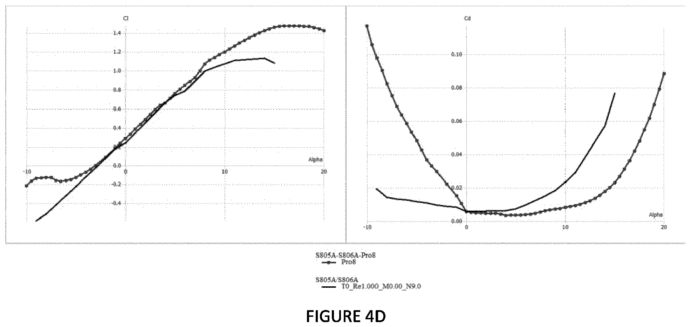

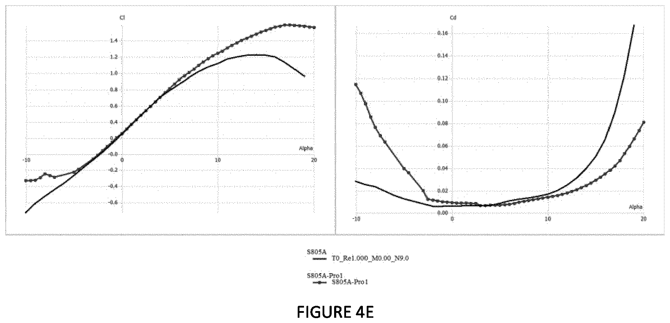

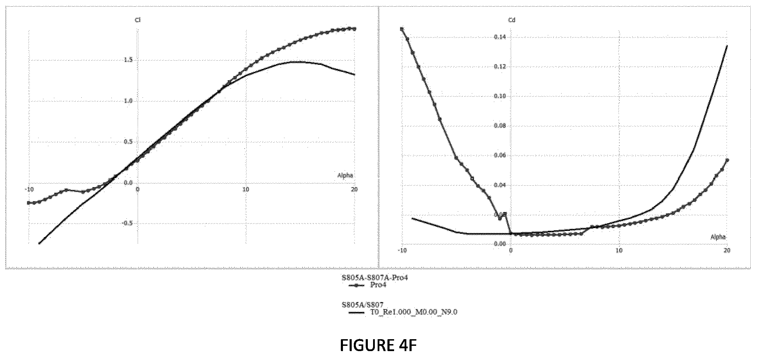

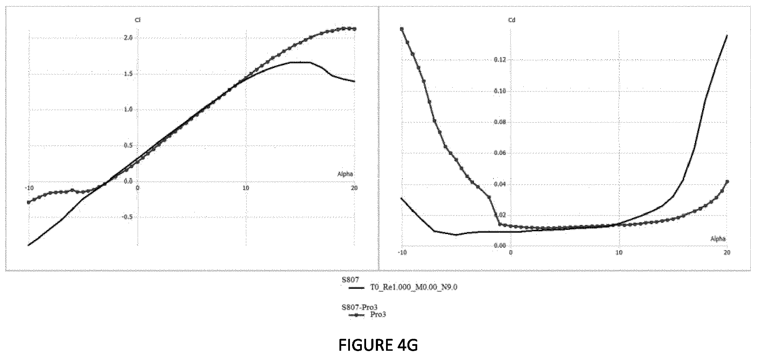

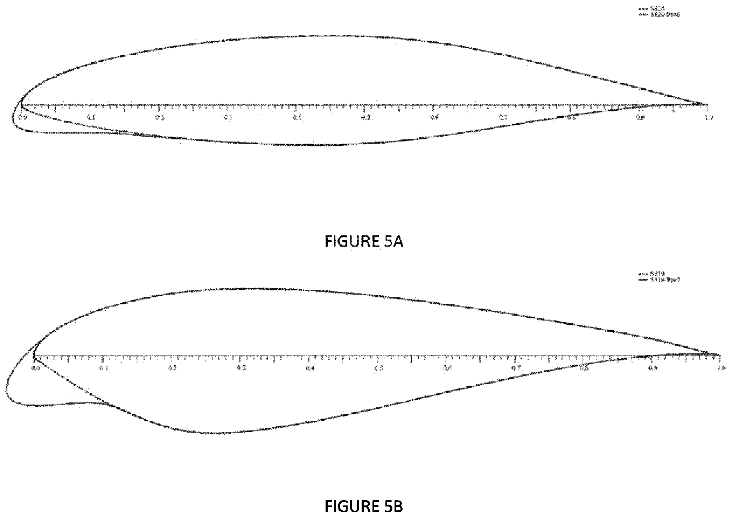

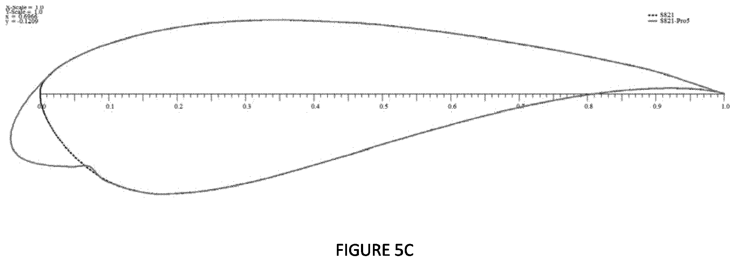

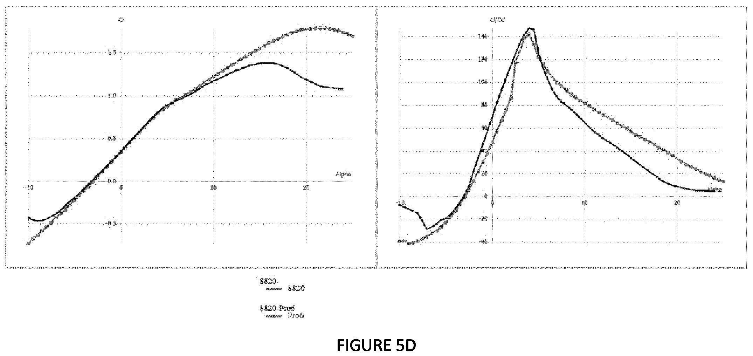

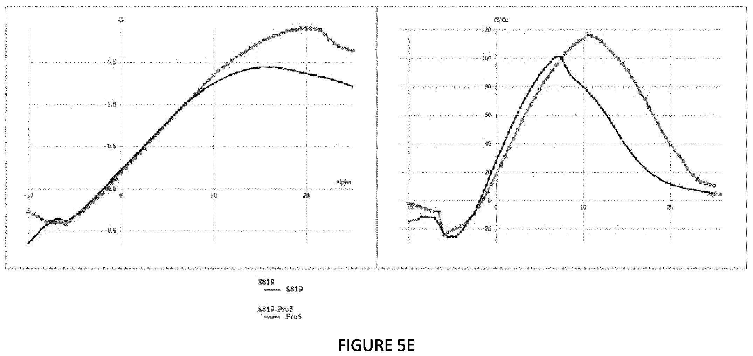

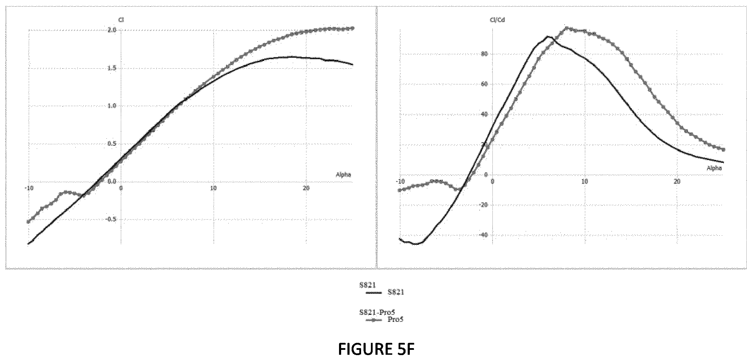

More specifically, Figure 2A illustrates an original NREL S822 airfoil, with two modified versions, S822-P1 and S822-10. Figures 2B shows graphs of the lift coefficient CI and drag coefficient Cd plotted against the angle of attack (Alpha) for the original and both variants. Figures 3A and 3B are the same for original airfoil NREL S823 and modified version S823-P4. Figures 4A and 4B illustrate an NREL S806A airfoil modified to S806-Pro5; a S805A/S806A modified to S805A-S806A-Pro8; a S805A modified to S805A-Pro1; a S805/S807 modified to S805A-S807A-Pro4; and a S807 modified to S807-Pro3. Figures 4C to 4G are the corresponding graphs for CI and Cd plotted against Alpha. Lastly, Figures 5A to 5C illustrate a S820, S819 and S821 airfoil with modified versions S820-Pro6, S819-Pro5 and S821-Pro5, respectively. Figures 5D to 5F are the corresponding graphs for CI and Cd plotted against Alpha.

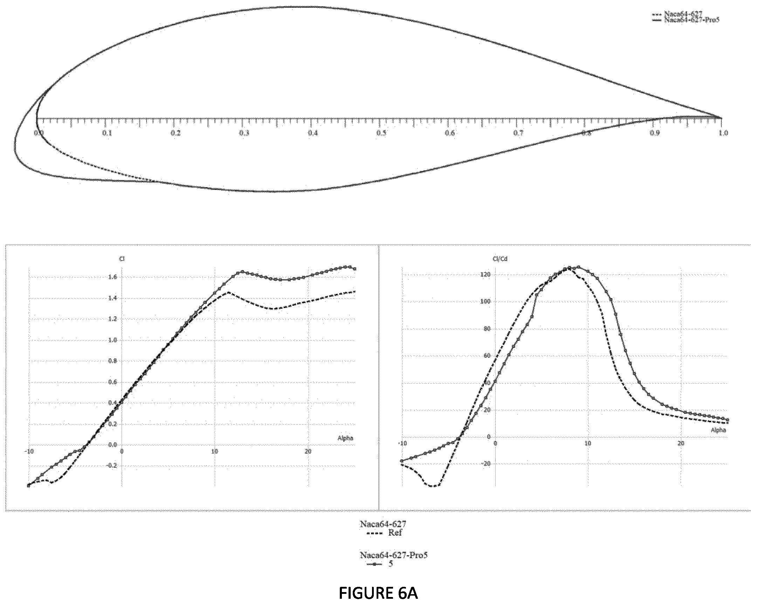

Referring to Figures 6A-6P the NACA series airfoils were modified from the original profiles as shown. The performance was modelled and the results detailed in the accompanying graph for each original and modified airfoil. Performance was consistent with improved performance parameters at higher angles of attack.

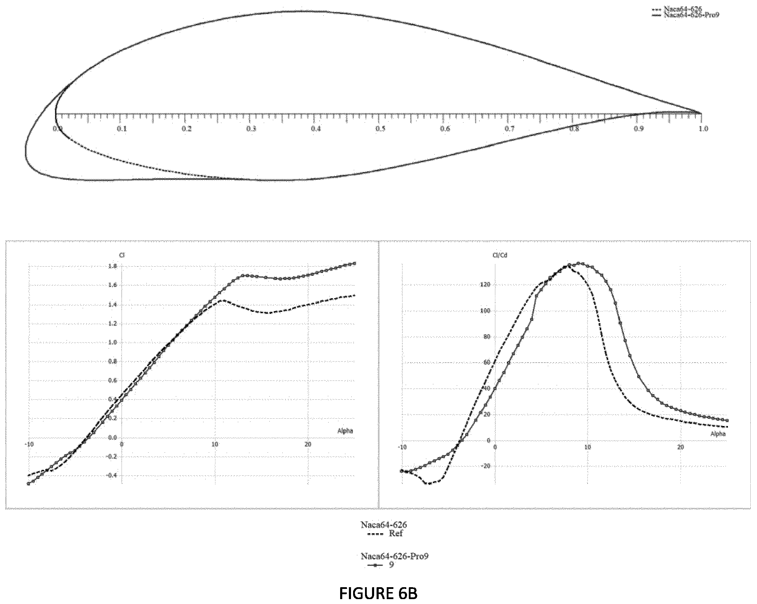

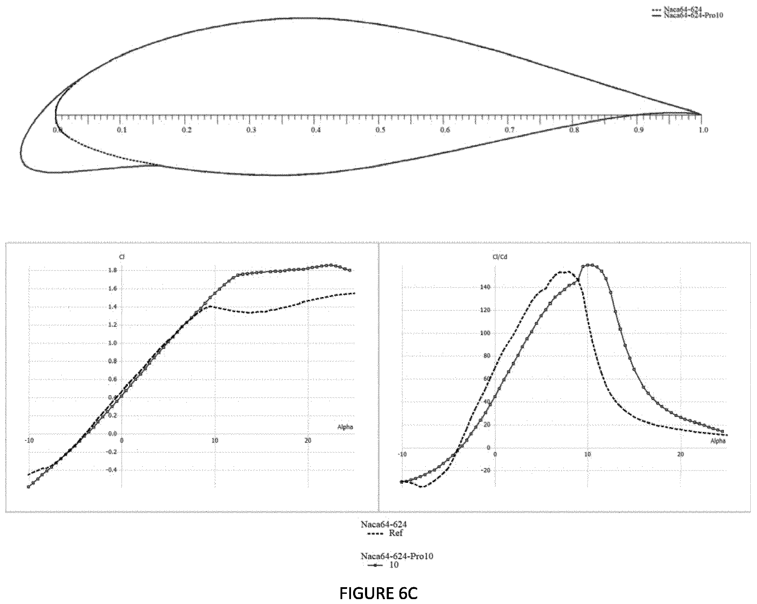

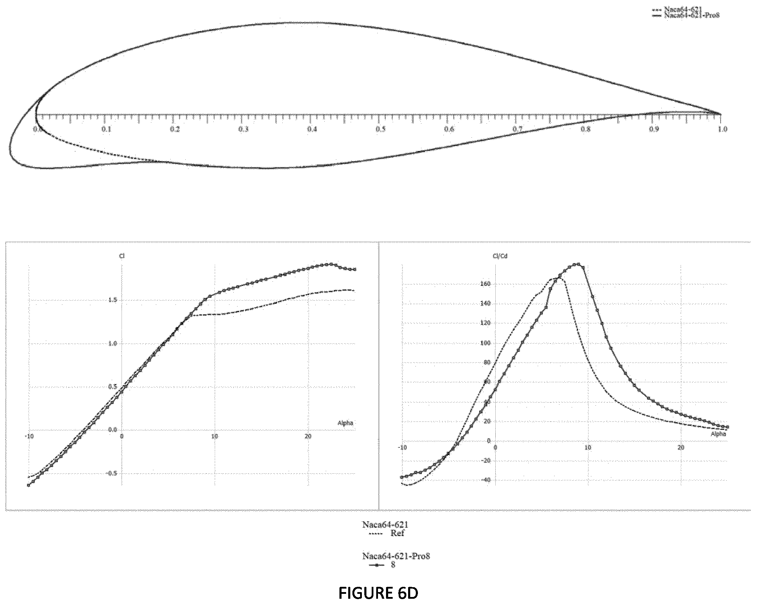

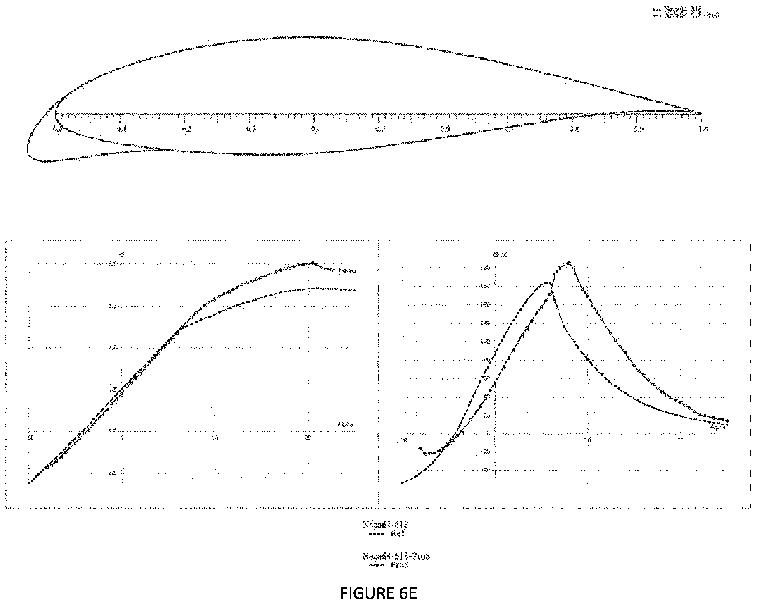

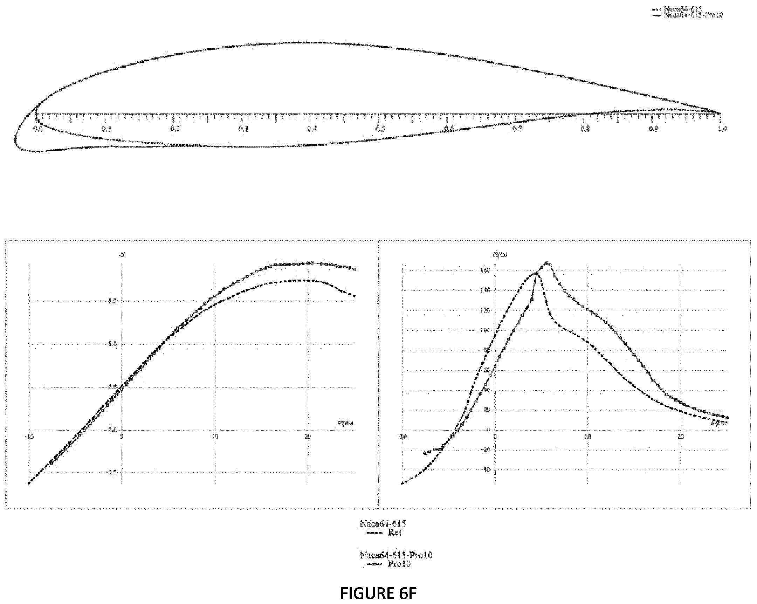

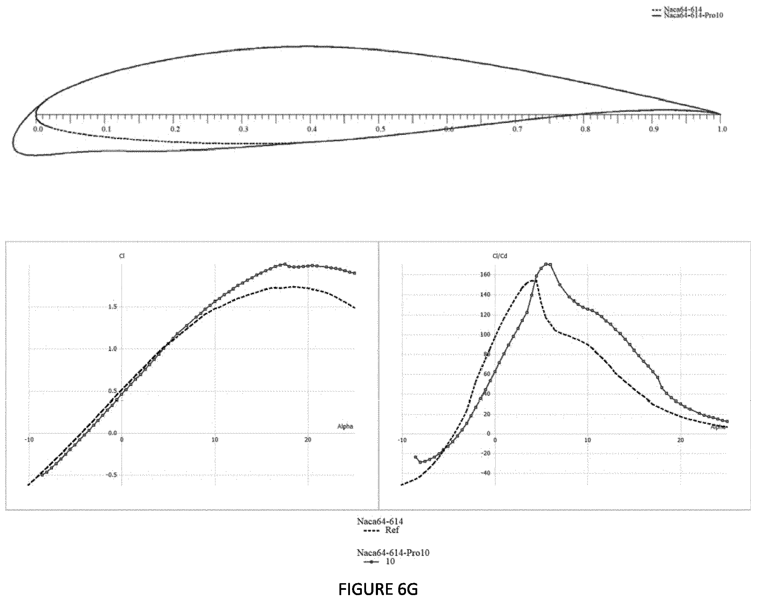

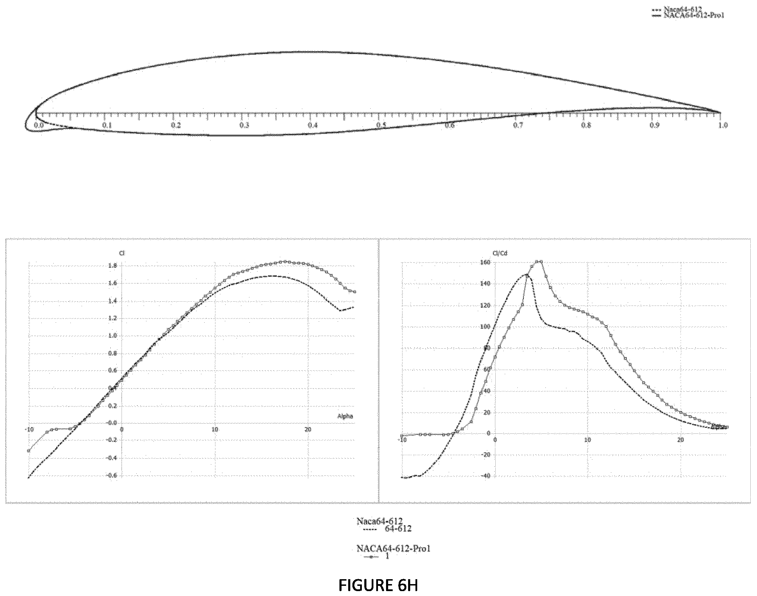

More specifically, Figure 6A illustrates a NACA64-627 airfoil and the modified version NACA64-627-Pro5, along with graphs of CI vs. Alpha and Cl/Cd vs. Alpha. Figure 6B illustrates a NACA64-626 airfoil and the modified version NACA64-626-Pro9, along with graphs of CI vs. Alpha and Cl/Cd vs. Alpha. Figure 6C illustrates a NACA64-624 airfoil and the modified version NACA64-624-Pro10, along with graphs of CI vs. Alpha and Cl/Cd vs. Alpha. Figure 6d illustrates a NACA64-621 airfoil and the modified version NACA64-621-Pro8, along with graphs of CI vs. Alpha and Cl/Cd vs. Alpha. Figure 6E illustrates a NACA64-618 airfoil and the modified version NACA64-618-Pro8, along with graphs of CI vs. Alpha and Cl/Cd vs. Alpha. Figure 6F illustrates a NACA64-615 airfoil and the modified version NACA64-615-Pro10, along with graphs of CI vs. Alpha and Cl/Cd vs. Alpha. Figure 6G illustrates a NACA64-614 airfoil and the modified version NACA64-614-Pro10, along with graphs of CI vs. Alpha and Cl/Cd vs. Alpha. Figure 6H illustrates a NACA64-624 airfoil and the modified version NACA64-624-Pro10, along with graphs of CI vs. Alpha and Cl/Cd vs. Alpha.

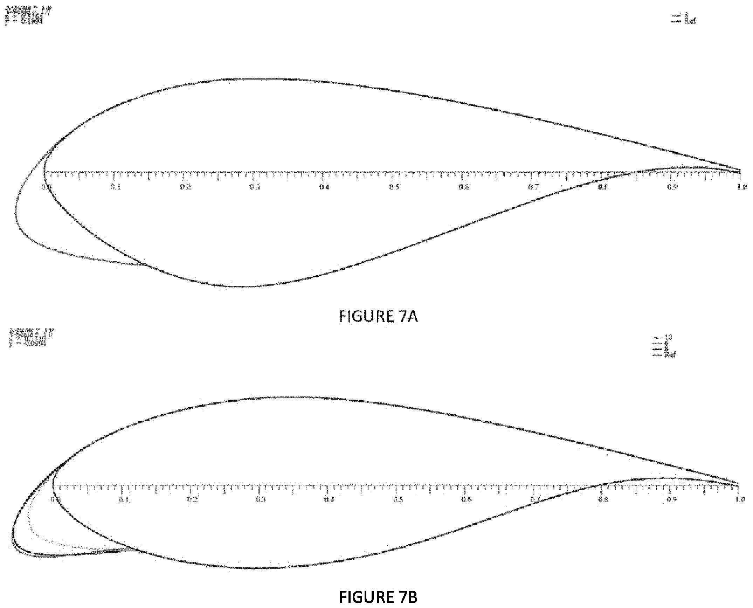

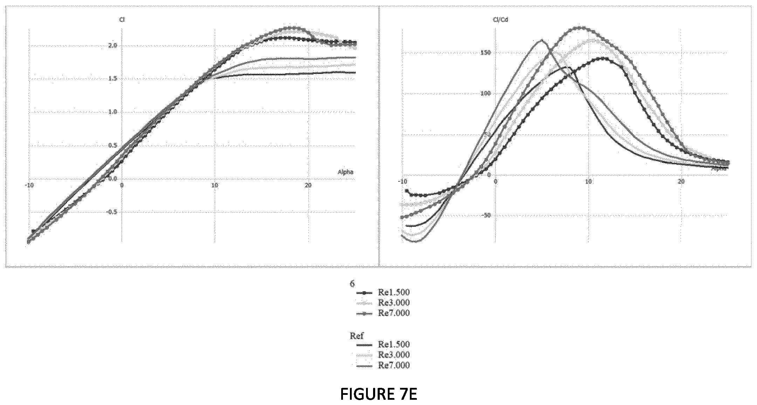

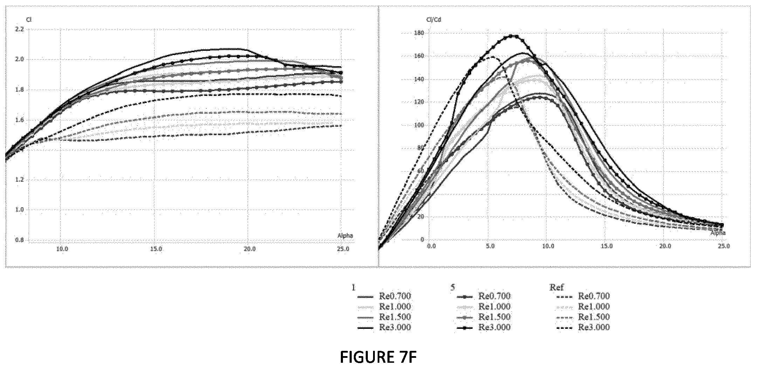

Referring to Figures 7A-7H the DU series airfoils were modified from the original profiles as shown. The performance was modelled and the results detailed in the accompanying graph for each original and modified airfoil. Performance was consistent with improved performance parameters at higher angles of attack.

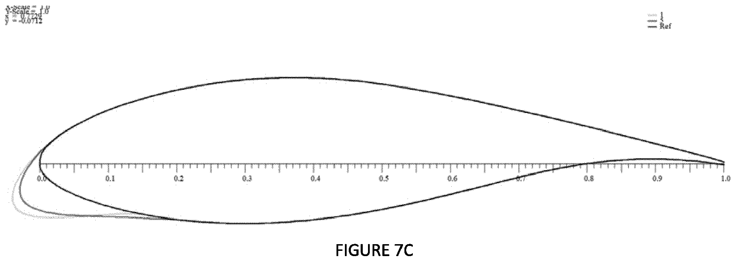

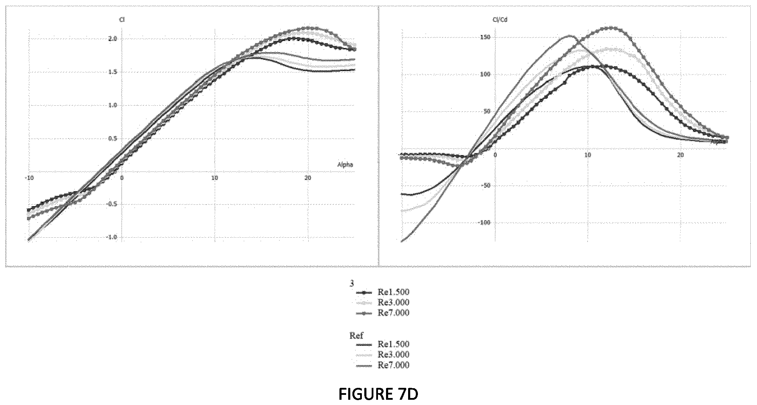

Figure 7A illustrates a DU97-W-300 reference airfoil and a modified version (3). Figure 7B illustrates a DU91-W-250 reference airfoil and three modified versions (6, 8, 10). Figure 7C illustrates a DU93-W-201 reference airfoil and two modified versions (1, 5). Figures 7D-7F respectively show graphs of CI and Cd against Alpha at different Reynolds numbers (Re) for both the reference airfoils and the modified airfoils.

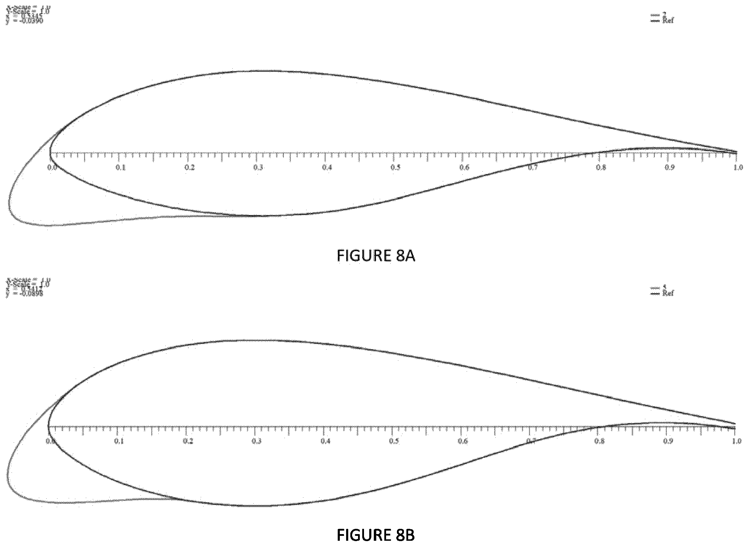

Referring to Figures 8A-8F the FFA series airfoils were modified from the original profiles as shown. The performance was modelled and the results detailed in the accompanying graph for each original and modified airfoil. Performance was consistent with improved performance parameters at higher angles of attack.

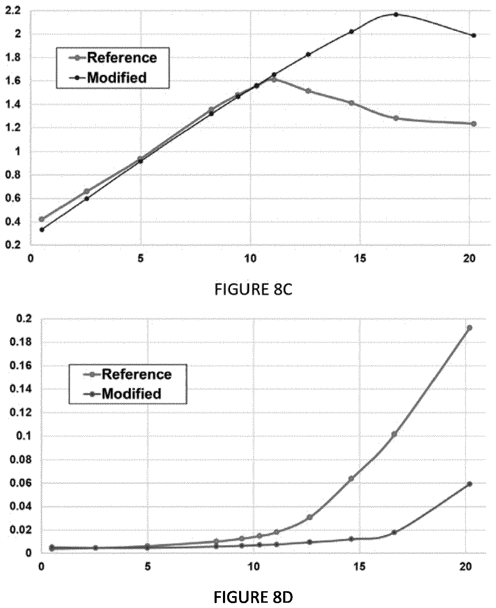

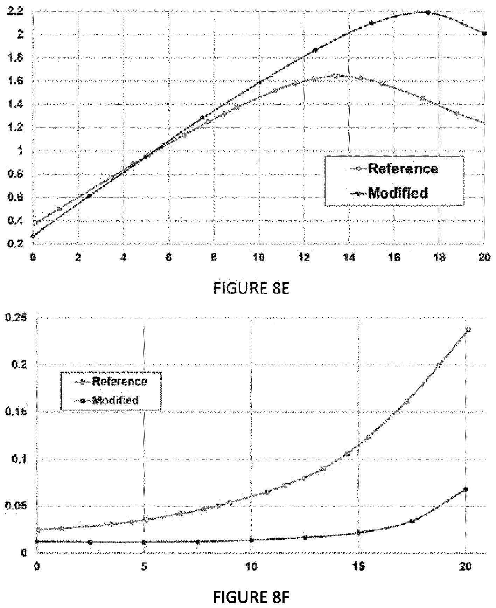

Figure 8A illustrates a FFA-W3-211 reference airfoil and a modified version (2). Figure 8B illustrates a FFA-W3-241 reference airfoil and a modified version (5). Figures 8C and 8D show CI vs. AOA and Cd vs. AOA for the airfoils of Figure 8A. Figures 8E and 8F show CI vs. AOA and Cd vs. AOA for the airfoils of Figure 8B.

As described above, the airfoil was tested for use with turbines, particularly wind turbines. However, it may be expected that the airfoil may be used for other blade and rotor applications, with or without improved performance parameters. Such applications may include, but are not limited to, propellers, helicopter rotors, and drone rotors.

It should also be noted that the steps described in the method of use can be carried out in many different orders according to user preference. The use of "step of" should not be interpreted as "step for", in the claims herein and is not intended to invoke the provisions of 35 U.S.C. § 112(f). It should also be noted that, under appropriate circumstances, considering such issues as design preference, user preferences, marketing preferences, cost, structural requirements, available materials, technological advances, etc., other methods are taught herein.

The embodiments of the invention described herein are exemplary and numerous modifications, variations and rearrangements can be readily envisioned to achieve substantially equivalent results, all of which are intended to be embraced within the spirit and scope of the invention. Further, the purpose of the foregoing abstract is to enable the U.S. Patent and Trademark Office and the public generally, and especially the scientist, engineers and practitioners in the art who are not familiar with patent or legal terms or phraseology, to determine quickly from a cursory inspection the nature and essence of the technical disclosure of the application.

The present invention may be embodied in other specific forms without departing from the spirit or essential characteristics thereof. Certain adaptations and modifications of the invention will be obvious to those skilled in the art. Therefore, the presently discussed embodiments are considered to be illustrative and not restrictive, the scope of the invention being indicated by the appended claims rather than the foregoing description and all changes which come within the meaning and range of equivalency of the claims are therefore intended to be embraced therein.

## Claims

1. A modified airfoil, comprising:
an original airfoil having an original leading edge profile with an original leading edge terminating at an x,y co-ordinate of 0,0 and a trailing edge terminating at an x,y co-ordinate of 1,0; and
a shape modification element attached to the original airfoil such that a new leading edge of a new leading edge profile formed by the shape modification element terminates at a negative x co-ordinate relative to the original leading edge,
wherein the new leading edge profile has a new leading edge profile shape with a NACA mean chord line between 0.3 and 0.7, a thickness between 12% and 17% of the chord line, with a maximum thickness located between 10% and 40% of the chord line, starting from the new leading edge of the new leading edge profile; and a leading edge radius between 1% and 6% of the chord line.

2. The modified airfoil of claim 1, wherein the new leading edge of the new leading edge profile further terminates at a negative y co-ordinate relative to the original leading edge.

3. The modified airfoil of claim 1, wherein the shape modification element is formed of a same material as the original airfoil.

4. The modified airfoil of claim 1, wherein the shape modification element is detachably coupled to the original airfoil.

5. The modified airfoil of claim 1, wherein the new leading edge profile is scaled between 50% to 250% of the original leading edge profile.

6. The modified airfoil of claim 1, wherein the original airfoil has an airfoil shape selected from one of: a NACA 64-6XX series airfoil, a DU9X series airfoil, a FFA-W3-XXX series airfoil, and a NREL S8XX series airfoil.

7. The modified airfoil of claim 1, wherein the original airfoil has an airfoil shape with one or more of the following parameters: positive camber, negative camber, reflexed camber and symmetric.

8. An airfoil, the airfoil having a shape defined by a leading edge profile and a trailing edge, comprising:
the airfoil having a shape comprising:
a NACA mean chord line between 0.3 and 0.7;
a thickness between 10% and 48% of the chord line, with a maximum thickness located between 10% and 40% of the chord line, starting from a leading edge of the leading edge profile; and
a leading edge radius between 1% and 6% of the chord line,
wherein the leading edge profile is such that the leading edge creates a droop which is such that the leading edge extends below a x-coordinate plane defined by the trailing edge.

9. The airfoil of claim 8, wherein the leading edge of the leading edge profile further extends beyond a y-coordinate plane defined by the trailing edge.

10. The airfoil of claim 8, wherein the shape is based on one of: a NACA 64-6XX series airfoil, a DU9X series airfoil, a FFA-W3-XXX series airfoil, and a NREL S8XX series airfoil.

11. The airfoil of claim 8, wherein the airfoil has a positive camber.

12. The airfoil of claim 8, wherein the airfoil has a reflexed camber.

13. A method for modifying an airfoil, comprising:
defining the airfoil with a airfoil shape such that an original leading edge of an original leading edge profile is positioned at an 0,0 x,y co-ordinate and an original trailing edge is positioned at an 1,0 x,y co-ordinate; and
modifying the original leading edge profile such that a new leading edge of a new leading edge profile is positioned at a negative x co-ordinate relative to the original leading edge,
wherein the new leading edge profile has a new leading edge profile shape with a NACA mean chord line between 0.3 and 0.7, a thickness between 12% and 17% of the chord line, with a maximum thickness located between 10% and 40% of the chord line, starting from the new leading edge of the new leading edge profile; and a leading edge radius between 1% and 6% of the chord line.

14. The method of claim 13, wherein the new leading edge of the new leading edge profile is further positioned at a negative y co-ordinate relative to the original leading edge.

15. The method of claim 13, wherein the new leading edge profile is scaled between 50% to 250% of the original leading edge profile.

16. The method of claim 13, where the airfoil shape is selected from one of: a NACA 64-6XX series airfoil, a DU9X series airfoil, a FFA-W3-XXX series airfoil, and a NREL S8XX series airfoil.

17. The method of claim 13, wherein the step of modifying the original leading edge profile further comprises attaching a shape modification element to the airfoil.

18. The method of claim 17, wherein the shape modification element is detachably coupled to the original airfoil.

19. The method of claim 17, wherein the shape modification element is formed of a same material as the airfoil.

20. The method of claim 13, wherein the airfoil shape has one or more of the following parameters: positive camber, negative camber, reflexed camber and symmetric.
